# EUROPÄISCHE PATENTSCHRIFT

(11) **EP 4 027 796 B1**
(45) Veröffentlichungstag und Bekanntmachung des Hinweises auf die Patenterteilung: **08.11.2023**
(21) Anmeldenummer: 20789252.2
(22) Anmeldetag: 08.09.2020
(51) Int. Cl.: A22C 17/00, A22C 21/00, B02C 18/30

(54) **FÖRDERSCHNECKE FÜR EINE SCHNEID- UND SEPARIERVORRICHTUNG**
CONVEYING AUGER FOR A CUTTING AND SEPARATING APPARATUS
VIS TRANSPORTEUSE POUR UN DISPOSITIF DE COUPE ET DE SEPARATION

(30) Priorität: 09.09.2019 DE 102019006336
(43) Veröffentlichungstag der Anmeldung: 20.07.2022
(73) Patentinhaber: SEPAgrind GmbH, 51491 Overath (DE)
(72) Erfinder: VON DER WEIDEN, Helmut, 67824 Feilbingert (DE)
(74) Vertreter: Straubel, Dirk
(86) Internationale Anmeldenummer: PCT/IB2020/058335
(87) Internationale Veröffentlichungsnummer: WO 2021/048738

(56) Entgegenhaltungen:
- RU-C1- 2 064 339
- US-A- 3 132 680
- US-E- R E32 060

## Beschreibung

Die Erfindung betrifft eine Förderschnecke für eine Schneid- und Separiervorrichtung gemäß den im Oberbegriff des Anspruchs 1 stehenden Merkmalen. Die Erfindung ist außerdem an einer Schneid- und Separiervorrichtung verwirklicht.

Die Förderschnecke enthaltene Schneid- und Separiervorrichtungen werden häufig in der Lebensmittelindustrie, insbesondere für die Zerkleinerung und Weiterverarbeitung von Fleisch eingesetzt. Bei der Verarbeitung von Fleisch beispielsweise zu Wurstwaren sind in der Lebensmittelindustrie insbesondere Magerfleischmuskelgruppen mit einem geringen Anteil von Kollagengewebe von Interesse. Das zu verarbeitende Fleisch ist jedoch üblicherweise zusätzlich mit Fettgewebe, kollagenem Gewebe und Sehnen durchsetzt, welches während der Zerkleinerung möglichst vollständig aussortiert und aus dem Verarbeitungszyklus entfernt werden soll.

Zum Entfernen dieser unerwünschten Bestandteile dienen beispielsweise Schneid- und Separiervorrichtungen entsprechend der DE 10 2017 003 407 B3, welche eine Zerkleinerungstrommel mit einem Druckgehäuse aufweisen, in dem die Förderschnecke drehbar gelagert ist. Das Druckgehäuse weist eine Vielzahl radial ausgerichteter Schneidöffnungen auf. Zu verarbeitendes Lebensmittel wird über eine Eintrittsöffnung in das Druckgehäuse gefördert, in dem weichere Anteile des zu verarbeitenden Lebensmittels aufgrund des von der Förderschnecke auf das Lebensmittel übertragenen Druckes in die Schneidöffnungen ausweichen, als Lebensmittelzapfen abgetrennt und durch die Schneidöffnungen aus dem Druckzylinder herausgedrückt werden. Hierbei handelt es sich um den für die Weiterverarbeitung gewünschten Lebensmittelbestandteil. Sehniges Material sowie nicht verwertbare Feststoffe nehmen nicht am Zerkleinerungsprozess teil und verlassen das Druckgehäuse durch eine am Ende angeordnete Ausschuböffnung. Es hat sich jedoch gezeigt, dass sich mit zunehmender Betriebszeit Material mit großer Festigkeit wie zum Beispiel Kollagen sich an der Innenwand festsetzt und die Schneidöffnungen überdeckt, so dass diese nicht mehr für die Zerkleinerungsarbeit zur Verfügung stehen und die Schneidleistung der Schneid- und Separiervorrichtung sinkt.

Die US RE 32 060 E offenbart eine Schneidvorrichtung mit einer darin gelagerten Förderschnecke. An einem zulaufseitigen Abschnitt ist die Förderschnecke auf ihrer Vorderflanke mit einem konkav ausgeformten Schneckengang ausgebildet, wodurch ein äußeres Ende des Schneckenganges in Förderrichtung vorsteht. Das vorstehende, äußere Ende des Schneckenganges dient dazu, Fragmente knöchernen Materials in Richtung der Achse der Förderschnecke zu drücken.

In der US 2,841,197 ist ebenfalls eine Schneidvorrichtung mit einer darin angeordneten Förderschnecke beschrieben. Die Förderschnecke kann auch als Gussformteil hergestellt werden, wobei hierfür die Form eine Verjüngung an dem radialen Endabschnitt der Förderschnecke aufweist, so dass keine spezielle Bearbeitung der Messer erforderlich ist, um die Verjüngung in der zusammengebauten Maschine zu bewirken.

Die der Erfindung zugrunde liegende Aufgabe bestand darin, eine Förderschnecke derart zu verbessern, dass die Schneidleistung der Schneid- und Separiervorrichtung signifikant verbessert sind.

Die Aufgabe wird erfindungsgemäß mit den Merkmalen des Anspruchs 1 gelöst. Der positive Spanwinkel hintergreift und entfernt besonders effektiv Anhaftungen eines zu verarbeitenden Lebensmittels, welche in den Wirkbereich der Förderschnecke gelangen, von der Innenwand der Zerkleinerungstrommel einer Schneidvorrichtung. Vorzugsweise beträgt der Spanwinkel zwischen 10° und 50°, besonders bevorzugt 20° und 40°, ganz besonders bevorzugt zwischen 25° und 35°.

Die geschärfte Schneidkante ist aus einer an einem distalen Ende der Vorderflanke eingebrachten Nut gebildet, deren außenliegende Kontur den zylindrischen Abschnitt schneidet. Die außenliegende Kontur der Nut bildet bei dieser Ausführungsform den relevanten Abschnitt der Vorderflanke des Schneckenganges. In diesem Fall ist der Spanwinkel zwischen der außenliegenden Kontur der Nut und der Bearbeitungsebene angeordnet. Der Keilwinkel erstreckt sich dann zwischen der außenliegenden Kontur der Nut und dem zylindrischen Abschnitt des Schneckenganges. Eine innenliegende Kontur der Nut geht in Richtung der Schneckenwelle in die Vorderflanke des Schneckenganges über. Die Breite der Nut nimmt in radialer Richtung lediglich einen Teilabschnitt von der Vorderflanke beziehungsweise vom Radius des Schneckenganges ein.

Vorteilhafterweise ist zwischen der Vorderflanke und dem zylindrischen Abschnitt ein Keilwinkel von 40° bis 80°, besonders bevorzugt von 50° bis 70°, ganz besonders bevorzugt von 55° bis 65° ausgebildet.

Sinnvollerweise ist zwischen dem zylindrischen Abschnitt und der Rückflanke ein Radius oder eine Fase angeordnet. Eine derartige Materialreduktion vermindert den Temperaturanstieg in dem zu verarbeitenden Lebensmittel und senkt hierdurch die bakterielle Belastung.

Die Erfindung ist auch an einer Schneid- und Separiervorrichtung mit der erfindungsgemäßen Förderschnecke verwirklicht, wobei die Förderschnecke drehbar in einem Druckgehäuse einer Zerkleinerungstrommel gelagert ist, an dessen ersten Endabschnitt eine Eintrittsöffnung und an dessen zweiten Endabschnitt eine Austrittsöffnung ausgebildet ist, wobei in einem Druckgehäuseabschnitt des Druckgehäuses eine Vielzahl von Schneidöffnungen angeordnet sind, welche den Druckgehäuseabschnitt von einer Innenwand zu einer Außenwand durchgängig durchsetzen.

Vorzugsweise ist die geschärfte Schneidkante an einem die Schneidöffnungen überstreichenden Abschnitt der Förderschnecke ausgebildet. Nur in diesem Bereich erfolgt eine Zerkleinerung des zu verarbeitenden Lebensmittels mit dem Risiko einer Überdeckung der Schneidöffnungen. Ein Zuführabschnitt der Förderschnecke, welcher aufströmig zwischen dem Druckgehäuseabschnitt mit den darin eingebrachten Schneidöffnungen und der Eintrittsöffnung des Druckgehäuses angeordnet sein kann, benötigt keine geschärfte Schneidkante. Hierdurch lassen sich die Fertigungskosten der Förderschnecke erheblich senken, da die geschärfte Schneidkante nur abschnittsweise an der Förderschnecke auszuformen ist.

Der zylindrische Abschnitt des Schneckenganges kann eine Breite aufweisen, die mindestens dem Durchmesser der Schneidöffnungen an der Innenwand entspricht. Der Schneckengang erhält bei dieser Dimensionierung und den zu erwartenden betrieblichen Lasten eine ausreichende Festigkeit ohne reversible Verformung. Darüber hinaus wird die Schneidleistung und -qualität günstig beeinflusst, da der in der Schneidöffnung gehaltene Fleischzapfen vollständig von dem im Druckgehäuseabschnitt befindlichen, zu verarbeitenden Lebensmittel gelöst wird.

Es hat sich als besonders günstig herausgestellt, wenn die Schneidöffnungen mit bezogen auf die Innenwand unter einem Winkel geneigten Lochachsen ausgerichtet sind. Die Schneidöffnungen treten an der Innenwand des Druckgehäuses aus und verrichten bei Betrieb der Schneid- und Separiervorrichtung den überwiegenden Teil der Schneidarbeit an dem zu verarbeitenden Lebensmittel. Aus der geneigten Lochachsen der Schneidöffnungen resultiert im Übergangsbereich von Schneidöffnung und Innenwand eine besonders scharfe, schneidende Öffnungskante mit einem Keilwinkel von unter 90°. Auf der gegenüberliegenden Seite der schneidenden Öffnungskante weist die Schneidöffnung dagegen eine einziehende Öffnungskante mit einem stumpfen Winkel größer 90° auf, in welche das zu verarbeitende Lebensmittel besonders günstig hineinwandert. Durch die geneigten Lochachsen der Schneidöffnungen lassen sich die scharfe, schneidende Öffnungskante und die stumpfe, einziehende Öffnungskante besonders einfach herstellen.

Vorteilhafterweise umfasst der Winkel der geneigten Lochachse einen ersten Winkel, welcher auf der zur Eintrittsöffnung des Druckgehäuses abgewandten Seite der Schneidöffnung zwischen deren Lochachse und der Innenwand angeordnet ist. Unter dem ersten Winkel ist die Lochachse in Richtung der Eintrittsöffnung des Druckgehäuses geneigt. In axialer Richtung des Druckgehäuses fluchtet zweckmäßigerweise dessen Radius mit der Lochachse. Jede Schneidöffnung kann daher mit der Innenwand des Druckgehäuseabschnittes eine der Austrittsöffnung zugewandte schneidende Öffnungskante und eine der Eintrittsöffnung zugewandte einziehende Öffnungskante aufweisen.

Da das zu verarbeitende Lebensmittel von der Eintrittsöffnung im Wesentlichen axial durch das Druckgehäuse in Richtung der Austrittsöffnung vorgeschoben wird, ist die schneidende Öffnungskante auf der zur Eintrittsöffnung des Druckgehäuses abgewandten Seite der Schneidöffnung ausgebildet und steht somit der Hauptbewegungsrichtung des zu verarbeitenden Lebensmittels entgegen. Hieraus resultiert ein sauberer Trennschnitt ohne nennenswerte Quetschung des zu verarbeitenden Lebensmittels.

Vorzugsweise beträgt der erste Winkel zwischen 60° und 88°, besonders bevorzugt 65° bis 85°, ganz besonders bevorzugt 70 bis 80°. Je kleiner der erste Winkel ist, desto schärfer ist die daraus gebildete schneidende Öffnungskante, woraus eine besonders hohe Schneidleistung bei hoher Qualität des für die Weiterverarbeitung gewünschten Lebensmittelbestandteils resultiert. Mit einem kleineren ersten Winkel sinkt jedoch auch die verschleißbedingte Standzeit der Zerkleinerungstrommel.

Sinnvollerweise sind die Lochachsen derart ausgerichtet, dass die schneidende Öffnungskante zwischen der Innenwand und der Lochachse mit dem ersten Winkel ausgebildet ist. Der Keilwinkel der schneidenden Öffnungskante entspricht dem ersten Winkel der zugehörigen Lochachse.

Der Winkel kann einen zweiten Winkel umfassen, der in Umfangsrichtung des Druckgehäuseabschnittes zwischen der Lochachse und dem Radius des Druckgehäuseabschnittes angeordnet ist. Hierdurch sind die Lochachsen zusätzlich in Umfangsrichtung des Druckgehäuseabschnittes geneigt. Die schneidende Öffnungskante wandert hierdurch von der zur Austrittsöffnung des Druckgehäuses gerichteten Seite der Schneidöffnung weiter in Querrichtung und steht bei einer rotierenden Förderschnecke dem ebenfalls zumindest teilweise mitrotierenden Lebensmittel im Wesentlichen senkrecht gegenüber.

Vorteilhafterweise beträgt der zweite Winkel zwischen 2° und 30°, besonders bevorzugt 5° bis 25°, ganz besonders bevorzugt 10 bis 20°. Der zweite Winkel entspricht somit dem Betrag nach der Differenz von 90° und dem ersten Winkel.

Zweckmäßigerweise ist der zweite Winkel entgegen einem Drehsinn der Förderschnecke ausgerichtet. Hierdurch ist die schneidende Öffnungskante der Schneidöffnung seitlich aus der ursprünglich der Austrittsöffnung zugewandten Lage heraus verlagert und ragt in die Richtung der sich annähernden Vorderflanke des Schneckenganges sowie des davor befindlichen, zu verarbeitenden Lebensmittels. Die einziehende Öffnungskante liegt auch bei dieser Ausführungsform der schneidenden Öffnungskante gegenüber und wird von der Vorderflanke des Schneckenganges zuerst überstrichen. Aufgrund dieser Ausrichtung der Lochachse erfolgt eine besonders günstige Füllung der Schneidöffnung und eine besonders saubere Trennung des bereits in der Schneidöffnung befindlichen Lebensmittelzapfens.

In axialer Richtung und/oder in Umfangsrichtung können Öffnungskanten benachbarter Schneidöffnungen überlappend zueinander ausgerichtet sein. In axialer Richtung und/oder in Umfangsrichtung können Öffnungskanten benachbarter Schneidöffnungen überlappend zueinander ausgerichtet sein. Hierdurch wird vermieden, dass es zu einer Stegbildung kommt und ein Teil des zu verarbeitenden Lebensmittels ohne Kontakt mit einer Schneidöffnung durch den Druckgehäuseabschnitt hindurchgefördert wird. Günstigerweise sind in axialer Richtung hintereinander angeordnete Schneidöffnungen in Umfangsrichtung mit einem Versatzwinkel von 3° bis 9°, besonders bevorzugt 4° bis 8°, ganz besonders bevorzugt 5° bis 7°, versetzt zueinander ausgerichtet.

Zum besseren Verständnis wird die Erfindung nachfolgend anhand von sechs Figuren näher erläutert. Es zeigen die
- **Fig. 1:**: einen Längsschnitt durch eine Schneid- und Separiervorrichtung mit einer Zerkleinerungstrommel gemäß einer ersten Ausführungsform und darin angeordneter Förderschnecke;
- **Fig. 2:**: einen Längsschnitt durch die Zerkleinerungstrommel gemäß Fig. 1;
- **Fig. 3:**: einen vergrößerten Längsschnitt durch das Detail von Fig. 2;
- **Fig. 4:**: einen Querschnitt durch die Schneid- und Separiervorrichtung gemäß Fig. 1 im Bereich des Druckgehäuseabschnittes;
- **Fig. 5:**: einen Längsschnitt durch die Förderschnecke gemäß Fig. 1 und
- **Fig. 6:**: einen Querschnitt durch die Schneid- und Separiervorrichtung mit einer Zerkleinerungstrommel gemäß einer zweiten Ausführungsform im Bereich des Druckgehäuseabschnittes.

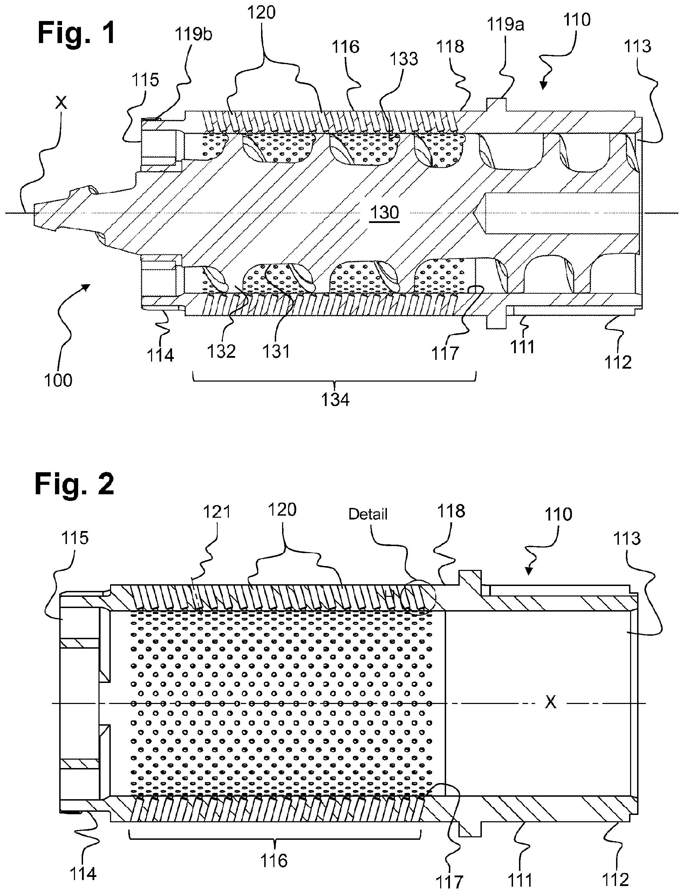

Die Fig. 1 zeigt einen Längsschnitt durch eine Schneid- und Separiervorrichtung 100 mit einer Zerkleinerungstrommel 110 und einer koaxial darin angeordneten Förderschnecke 130. Die Zerkleinerungstrommel 110 umfasst ein Druckgehäuse 111, an dessen ersten Endabschnitt 112 eine Eintrittsöffnung 113 ausgebildet ist, durch welche das zu zerkleinernde Lebensmittel der Zerkleinerungstrommel 110 zugeführt wird. Am gegenüberliegenden Ende des Druckgehäuses 111 befindet sich ein zweiter Endabschnitt 114, an dem eine Austrittsöffnung 115 ausgeformt ist, durch welche sehniges Material sowie nicht verwertbare Feststoffe aus dem Druckgehäuse 111 herausgefördert werden. Die Eintrittsöffnung 113 und die Austrittsöffnung 115 bilden jeweils gegenüberliegende, axiale Öffnungen des Druckgehäuses 111.

An der Zerkleinerungstrommel 110 ist an dem ersten Endabschnitt 112 des Druckgehäuses 111 ein aufströmiges Anschlussmittel 119a angebracht, über welches eine lösbare Verbindung zu einem hier nicht dargestellten Zuführkanal oder einem Aufgabetrichter herstellbar ist. Die Zerkleinerungstrommel 110 weist darüber hinaus an dem zweiten Endabschnitt 114 des Druckgehäuses 111 ein abströmiges Anschlussmittel 119b auf, an welchem beispielsweise eine ebenfalls nicht dargestellte Drosselklappe zur Steuerung des Lebensmitteldruckes innerhalb des Druckgehäuses 111 anbringbar ist.

Das Druckgehäuse 111 der Zerkleinerungstrommel 110 weist einen Druckgehäuseabschnitt 116 mit einer Vielzahl von Schneidöffnungen 120 auf, welche durchgängig von einer Innenwand 117 des Druckgehäuseabschnittes 116 bis zu einer Außenwand 118 verlaufen. Durch die Schneidöffnungen 120 entweicht der für die Weiterverarbeitung gewünschte Lebensmittelbestandteil.

Die Förderschnecke 130 umfasst eine drehbar angetriebene Schneckenwelle 131, deren Drehachse mit einer Gehäuselängsachse X des Druckgehäuses 111 fluchtet. An der Schneckenwelle 131 ist mindestens ein in axialer Richtung die Schneckenwelle 131 spiralförmig umgebender Schneckengang 132 ausgebildet, welcher bei einer Rotation der Schneckenwelle 131 aufgrund seiner Steigung in dem Druckgehäuse 111 befindliches Lebensmittel von der Eintrittsöffnung 113 in Richtung der Austrittsöffnung 115 vorschiebt. Dabei baut sich innerhalb des zu verarbeitenden Lebensmittels ein Druck auf, der das zu verarbeitende Lebensmittel in die Schneidöffnungen 120 schiebt, so dass sich innerhalb der Schneidöffnung 120 ein Lebensmittelzapfen ausbildet. Aufgrund der von der Förderschnecke 130 aufgebrachten, kontinuierlichen Vorschubbewegung des zu verarbeitenden Lebensmittels, reißt der Lebensmittelzapfen von dem in dem Druckgehäuseabschnitt 116 verbleibenden Lebensmittel ab und dringt durch die Schneidöffnung 120 aus dem Druckgehäuse 111 nach außen.

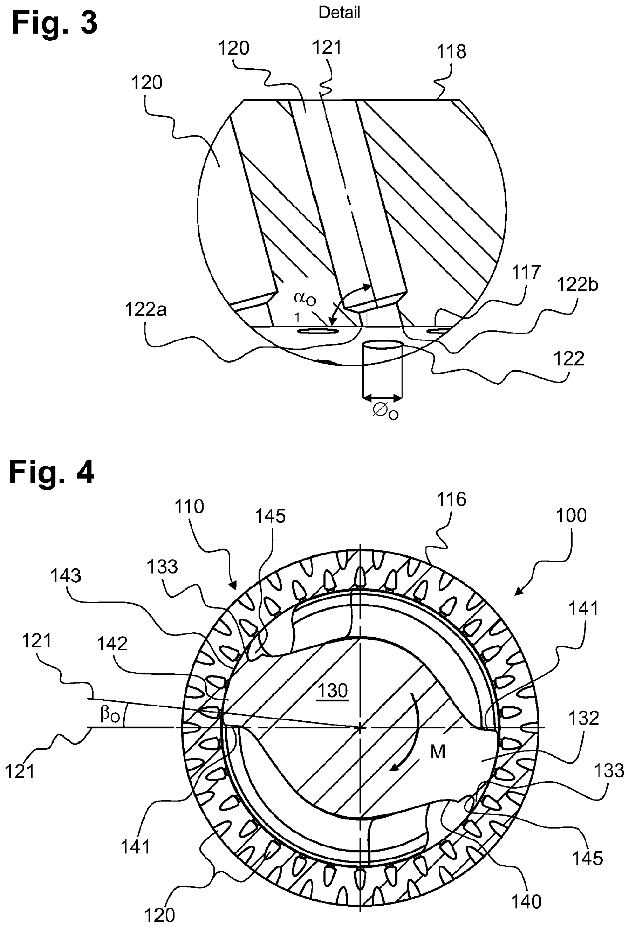

Der Schneckengang 132 weist jedoch lediglich im Bereich des Druckgehäuseabschnitts 116, das heißt in einem die Schneidöffnungen 120 überstreichenden Abschnitt 134 der Förderschnecke 130, an seinem außenliegenden Ende eine geschärfte Schneidkante 133 auf, deren Form und Funktion nachfolgend noch in Zusammenhang mit den Fig. 4 bis Fig. 6 erläutert wird.

Wie besonders gut in Fig. 2 zu erkennen ist, verlaufen die Schneidöffnungen 120 nicht in radialer Richtung durch den Druckgehäuseabschnitt 116, sondern sind mit ihrer Lochachse 121 geneigt. Die Neigung der Lochachse 121 ist derart gewählt, dass diese an der Innenwand 117 der Eintrittsöffnung 113 zugewandt ist.

Eine Vergrößerung des Details unter anderem betreffend die Schneidöffnungen 120 zeigt die Fig. 3. Die Schneidöffnungen 120 sind als gestufte Bohrung mit einem außenliegenden, durchmessergrößeren Querschnitt und einem innenliegenden, durchmesserkleineren Querschnitt ausgeführt, wodurch der für die Weiterverarbeitung gewünschte Lebensmittelbestandteil verhältnismäßig gering erwärmt und die Keimbelastung verringert wird, da der bereits in den Schneidöffnungen 120 abgetrennte Lebensmittelzapfen in den durchmessergrößeren Querschnitt expandieren kann.

An der Zerkleinerungsarbeit des zu verarbeitenden Lebensmittels ist jedoch lediglich der im Bereich der Innenwand 117 angeordnete Durchmesser ∅_{O} der Schneidöffnungen 120 beteiligt. Die Lochachse 121 ist unter einem ersten Winkel α_{O1} geneigt. Der Winkel α_{O1} ist auf der Seite der Austrittsöffnung 115 zwischen der Lochachse 121 und der Innenwand 117 beziehungsweise der Gehäuselängsachse X angetragen.

Jede Schneidöffnung 120 verfügt im Übergangsbereich zu der Innenwand 117 des Druckgehäuseabschnittes 116 über eine umlaufende Öffnungskante 122, von der jedoch ein der Austrittsöffnung 115 zugewandter Teil als schneidende Öffnungskante 122a und ein der Eintrittsöffnung 113 zugewandter Teil als einziehende Öffnungskante 122b für das zu zerkleinernde Lebensmittel dient. Aus der Neigung der Lochachse 121 unter dem ersten Winkel α_{O1} resultiert eine besonders scharfe schneidende Öffnungskante 122a unter demselben spitzen Winkel α_{O1}. Die einziehende Öffnungskante 122b weist dagegen einen stumpfen Winkel größer 90° auf und begünstigt dadurch den Eintritt des zu zerkleinernden Lebensmittels in die jeweilige Schneidöffnung 120. Die Größe des stumpfen Winkels der einziehenden Öffnungskante 122b beträgt 180° abzüglich des ersten Winkels α_{O1}.

Die Fig. 4 zeigt einen Querschnitt durch die Schneid- und Separiervorrichtung 100 mit einer Zerkleinerungstrommel 110 gemäß einer ersten Ausführungsform, bei welcher die Schneidöffnungen 120 in der Querschnittsebene radial auf die Gehäuselängsachse X zulaufen. In der Bildebene axial versetzt angeordnete Schneidöffnungen 120 sind derart zu den in den Bildebene davor stehenden Schneidöffnungen 120 angeordnet, dass deren Lochachsen 121 um einen Winkel βo in Umfangsrichtung versetzt zueinander ausgerichtet sind.

Die Förderschnecke 130 dreht sich im Drehsinn M, in der Bildebene der Fig. 4 im Uhrzeigersinn. Der Schneckengang 132 weist eine Vorderflanke 140 auf, die im Drehsinn M vorne angeordnet ist, sowie eine Rückflanke 141, die im Drehsinn M hinten angeordnet ist. Zwischen der Vorderflanke 140 und der Rückflanke 141 ist an jedem distalen Ende 142 des Schneckenganges 132 ein zylindrischer Abschnitt 143 zu erkennen, welcher komplementär zu der Innenwand 117 des Druckgehäuseabschnittes 116 ausgeformt ist.

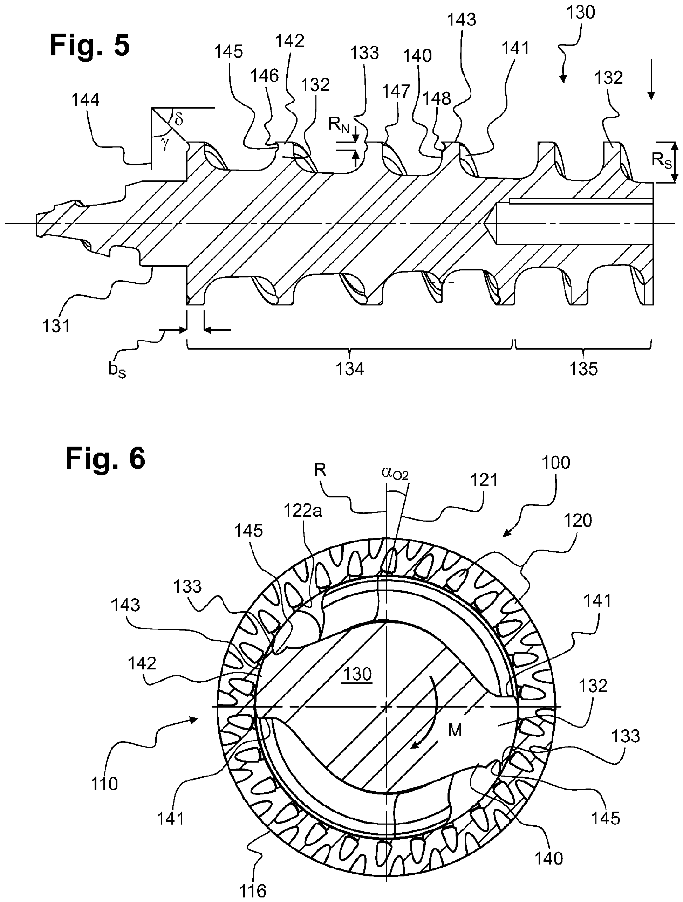

Die geschärfte Schneidkante 133 umfasst eine auf in der Vorderflanke 140 eingefügte Nut 145, deren außenliegende Kontur 146 (Fig. 5) an den zylindrischen Abschnitt 143 angrenzt und in diesen übergeht. Die Nut 145 ist über den axialen Verlauf der Förderschnecke 130 äquidistant zu dem zylindrischen Abschnitt 143 ausgebildet und erstreckt sich in axialer Richtung der Förderschnecke 130 über den gesamten, die Schneidöffnungen 120 überstreichenden Abschnitt 134. Die Nut 145 ist in radialer Richtung stets nur über einen Teil der Vorderflanke 140 des Schneckenganges 132 ausgebildet.

In Richtung der Schneckenwelle 131 grenzt eine innenliegende Kontur 148 der Nut 145 an die sich bis zur Schneckenwelle 131 erstreckende Vorderflanke 140 des Schneckenganges 132 an. Die Nut 145 weist in radialer Richtung eine Breite R_{N} auf, die kleiner als vorzugsweise 30 %, besonders bevorzugt 25 %, eines tragenden Radius Rs des Schneckenganges 132 ist.

Mit Hilfe der geschärften Schneidkante 133 lassen sich insbesondere Anhaftungen des zu verarbeitenden Lebensmittels an der Innenwand 117 des Druckgehäuseabschnittes 116 abschälen, so dass sich diese nicht dauerhaft über die Schneidöffnungen 120 legen und dadurch einen Eintritt des zu verarbeitenden Lebensmittels in die Schneidöffnungen 120 verhindern. Üblicherweise bestehen derartige Anhaftungen aus kollagenem Material, welches eine bis zu zwanzigfache Festigkeit gegenüber Magerfleisch hat und aufgrund seiner hohen Festigkeit kaum in die Schneidöffnungen 120 eindringt. Von der geschärften Schneidkante 133 abgeschälte Anhaftungen werden in Richtung der Austrittsöffnung 115 transportiert und dort entfernt.

Die Fig. 5 verdeutlicht in einem Längsschnitt durch die Förderschnecke 130, dass die geschärfte Schneidkante 133 aus der außenliegenden Kontur 146 der Nut 145 und dem zylindrischen Abschnitt 143 gebildet ist. Die geschärfte Schneidkante 133 weist einen Spanwinkel y auf, der zwischen einer senkrecht zur axialen Erstreckung der Förderschnecke 130 stehenden Bearbeitungsebene 144 und der außenliegenden Kontur 146 der Nut 145 aufgespannt ist. Ein Keilwinkel δ ist zwischen der außenliegenden Kontur 146 der Nut 145 und dem zylindrischen Abschnitt 143 des Schneckenganges 132 angeordnet. Da aufgrund der zylindrischen Abschnittes 143 des Schneckenganges 132 der Freiwinkel stets 0° ist, betragen die Summe von Spanwinkel y und Keilwinkel δ stets 90°.

Die geschärfte Schneidkante 133 ist lediglich in dem die Schneidöffnungen 120 überstreichenden Abschnitt 134 vorhanden. In einem Zuführabschnitt 135 der Förderschnecke 130, der das Druckgehäuse 111 der Zerkleinerungstrommel 110 zwischen dem Druckgehäuseabschnitt 116 mit den Schneidöffnungen 120 und der Eintrittsöffnung 113 überragt, weist diese lediglich einen konventionellen Schneckengang 132 auf, dessen Schneidkante beispielsweise mit einem Spanwinkel y von 90° ausgebildet sein kann. Da in diesem Bereich keine Schneidöffnungen 120 in dem Druckgehäuse 111 vorhanden sind, werden diese auch nicht durch Anhaftungen des zu verarbeitenden Lebensmittels zugesetzt und brauchen infolgedessen auch nicht von der geschärften Schneidkante 133 der Förderschnecke 130 entfernt zu werden.

Für eine hohe Schneidleistung der Schneid- und Separiervorrichtung 100 weist der Schneckengang 132 im Bereich des die Schneidöffnungen 120 überstreichenden Abschnittes 134 eine Breite bs auf, die mindestens dem Durchmesser ∅_{O} der Schneidöffnungen 120 an der Innenwand 117 des Druckgehäuseabschnittes 116 entspricht. Die Breite bs bildet den senkrechten Abstand zwischen Vorderflanke 140 und Rückflanke 141 des Schneckenganges 132.

Im Übergangsbereich zwischen zylindrischem Abschnitt 143 des Schneckenganges 132 und der zugehörigen Rückflanke 141 ist eine Fase 147 ausgebildet, die ebenfalls dazu beiträgt, eine Erwärmung des zu verarbeitenden Lebensmittels zu verringern. Anstelle einer Fase kann auch ein Radius oder eine andere geometrische Form im Übergangsbereich von zylindrischem Abschnitt 143 und Rückflanke 141 vorgesehen sein; wesentlich ist stets, dass eine Materialreduktion des Schneckenganges 132 in diesem Bereich vorhanden ist. Die Fase 147 verläuft entsprechend der Nut 145 ausschließlich in dem die Schneidöffnungen 120 überstreichenden Abschnitt 134 der Förderschnecke 130.

Die Fig. 6 zeigt einen Querschnitt durch die Schneid- und Separiervorrichtung 100 mit einer Zerkleinerungstrommel 110 gemäß einer zweiten Ausführungsform im Bereich des Druckgehäuseabschnittes 116. Die darin eingebrachten Schneidöffnungen 120 weisen Lochachsen 121 auf, die zusätzlich zu dem ersten Winkel α_{O1} auch noch unter einem zweiten Winkel α_{O2} geneigt sind.

Der Winkel α_{O2} ist seitlich zum Radius R des Druckgehäuseabschnittes 116 angetragen und somit in Umfangsrichtung des Druckgehäuseabschnittes 116 aufgespannt. Die zusätzlich unter dem zweiten Winkel α_{O2} geneigte Lochachse 121 gemäß der zweiten Ausführungsform läuft in Richtung der Innenwand 117 dem Drehsinn M der Förderschnecke 130 entgegen, so dass die Schneidöffnungen 120 auf ihrer bezüglich der Vorderflanke 140 des Schneckengangs 132 abgewandten Seite eine schneidende Öffnungskante 122a aufweisen. Aus der Neigung der Lochachse 121 unter dem zweiten Winkel α_{O2} resultiert eine ebenso scharfe schneidende Öffnungskante 122a zwischen der Innenwand 117 des Druckgehäuseabschnittes 116 und der Schneidöffnung 120 unter demselben spitzen Winkel α_{O2}.

### Bezugszeichenliste

- 100: Schneid- und Separiervorrichtung

- 110: Zerkleinerungstrommel
- 111: Druckgehäuse
- 112: erster Endabschnitt Druckgehäuse
- 113: Eintrittsöffnung
- 114: zweiter Endabschnitt Druckgehäuse
- 115: Austrittsöffnung
- 116: Druckgehäuseabschnitt
- 117: Innenwand Druckgehäuseabschnitt
- 118: Außenwand Druckgehäuseabschnitt
- 119a: aufströmiges Anschlussmittel
- 119b: abströmiges Anschlussmittel

- 120: Schneidöffnungen
- 121: Lochachse Schneidöffnungen
- 122: Öffnungskante
- 122a: schneidende Öffnungskante
- 122b: einziehende Öffnungskante

- 130: Förderschnecke
- 131: Schneckenwelle
- 132: Schneckengang
- 133: geschärfte Schneidkante
- 134: Schneidöffnungen überstreichender Abschnitt
- 135: Zuführabschnitt

- 140: Vorderflanke Schneckengang
- 141: Rückflanke Schneckengang
- 142: distales Ende Schneckengang
- 143: zylindrischer Abschnitt Schneckengang
- 144: Bearbeitungsebene
- 145: Nut
- 146: außenliegende Kontur Nut
- 147: Fase
- 148: innenliegende Kontur Nut

- bs: Breite Schneckengang
- M: Drehsinn Förderschnecke
- R_{N}: Breite Nut
- Rs: Radius Schneckengang

- R: Radius Druckgehäuseabschnitt
- X: Gehäuselängsachse

- α_{O1}: erster Winkel Lochachse Schneidöffnungen
- α_{O2}: zweiter Winkel Lochachse Schneidöffnungen
- β_{O}: Versatzwinkel Schneidöffnungen
- ∅_{O}: Durchmesser Schneidöffnungen
- y: Spanwinkel Schneidkante
- δ: Keilwinkel Schneidkante

## Patentansprüche

1. Förderschnecke (130) für eine Schneid- und Separiervorrichtung (100), umfassend eine Schneckenwelle (131) mit mindestens einem spiralförmig daran angeformten Schneckengang (132), welcher in Einbaulage eine Vorderflanke (140) zum schiebenden Transport eines Lebensmittels, eine auf der gegenüberliegenden Seite angeordnete Rückflanke (141) sowie an seinem distalen Ende (142) zwischen der Vorderflanke (140) und der Rückflanke (141) einen zylindrischen Abschnitt (143) aufweist, der im Übergangsbereich zu der Vorderflanke (140) des Schneckenganges (132) mit einer geschärften Schneidkante (133) ausgeformt ist, wobei die geschärfte Schneidkante (133) einen zwischen der Vorderflanke (140) und einer rechtwinklig zur Schneckenwelle (131) ausgerichteten Bearbeitungsebene (144) angeordneten positiven Spanwinkel (γ) aufweist,
**dadurch gekennzeichnet,**
**dass** die geschärfte Schneidkante (133) aus einer an einem distalen Ende (142) der Vorderflanke (140) eingebrachten Nut (145) gebildet ist, deren außenliegende Kontur (146) den zylindrischen Abschnitt (143) schneidet.

2. Förderschnecke (130) nach Anspruch 1, **dadurch gekennzeichnet, dass** der Spanwinkel (γ) zwischen 10° und 50°, besonders bevorzugt 20° und 40°, ganz besonders bevorzugt zwischen 25° und 35° beträgt.

3. Förderschnecke (130) nach Anspruch 1 oder 2, **dadurch gekennzeichnet, dass** zwischen der Vorderflanke (140) und dem zylindrischen Abschnitt (143) ein Keilwinkel (δ) von 40° bis 80°, besonders bevorzugt von 50° bis 70°, ganz besonders bevorzugt von 55° bis 65° ausgebildet ist.

4. Förderschnecke (130) nach einem der Ansprüche 1 bis 3, **dadurch gekennzeichnet, dass** zwischen dem zylindrischen Abschnitt (143) und der Rückflanke (141) ein Radius oder eine Fase (147) angeordnet ist.

5. Schneid- und Separiervorrichtung (100) mit einer Förderschnecke (130) nach einem der Ansprüche 1 bis 4, wobei die Förderschnecke (130) drehbar in einem Druckgehäuse (111) einer Zerkleinerungstrommel (110) gelagert ist, an dessen ersten Endabschnitt (112) eine Eintrittsöffnung (113) und an dessen zweiten Endabschnitt (114) eine Austrittsöffnung (115) ausgebildet ist,
**dadurch gekennzeichnet,**
**dass** in einem Druckgehäuseabschnitt (116) des Druckgehäuses (111) eine Vielzahl von Schneidöffnungen (120) angeordnet sind, welche den Druckgehäuseabschnitt (116) von einer Innenwand (117) zu einer Außenwand (118) durchgängig durchsetzen.

6. Schneid- und Separiervorrichtung (100) nach Anspruch 5, **dadurch gekennzeichnet, dass** die geschärfte Schneidkante (133) an einem die Schneidöffnungen (120) überstreichenden Abschnitt (134) der Förderschnecke (130) ausgebildet ist.

7. Schneid- und Separiervorrichtung (100) nach Anspruch 5 oder 6, **dadurch gekennzeichnet, dass** der zylindrische Abschnitt (143) des Schneckenganges (132) eine Breite (bs) aufweist, die mindestens dem Durchmesser (∅_{O}) der Schneidöffnungen (120) an der Innenwand (117) entspricht.

8. Schneid- und Separiervorrichtung (100) nach einem der Ansprüche 5 bis 7, **dadurch gekennzeichnet, dass** die Schneidöffnungen (120) mit bezogen auf die Innenwand (117) unter einem Winkel (α_{O}, α_{O2}) geneigten Lochachsen (121) ausgerichtet sind.

9. Schneid- und Separiervorrichtung (100) nach Anspruch 8, **dadurch gekennzeichnet, dass** der Winkel (α_{O1}, α_{O2}) einen ersten Winkel (α_{O1}) umfasst, welcher auf der zur Eintrittsöffnung (113) des Druckgehäuses (111) abgewandten Seite der Schneidöffnung (120) zwischen deren Lochachse (121) und der Innenwand (117) angeordnet ist.

10. Schneid- und Separiervorrichtung (100) nach Anspruch 9, **dadurch gekennzeichnet, dass** der erste Winkel (α_{O1}) zwischen 60° und 88°, besonders bevorzugt 65° bis 85°, ganz besonders bevorzugt 70 bis 80° beträgt.

11. Schneid- und Separiervorrichtung (100) nach einem der Ansprüche 5 bis 10, **dadurch gekennzeichnet, dass** jede Schneidöffnung (120) an der Innenwand (117) eine der Austrittsöffnung (115) zugewandte schneidende Öffnungskante (122a) und eine der Eintrittsöffnung (113) zugewandte einziehende Öffnungskante (122b) aufweist.

12. Schneid- und Separiervorrichtung (100) nach einem der Ansprüche 8 bis 11, **dadurch gekennzeichnet, dass** der Winkel (α_{O1}, α_{O2}) einen zweiten Winkel (α_{O2}) umfasst, der in Umfangsrichtung des Druckgehäuseabschnittes (116) zwischen der Lochachse (121) und dem Radius (R) des Druckgehäuseabschnittes (116) angeordnet ist.

13. Schneid- und Separiervorrichtung (100) nach Anspruch 12, **dadurch gekennzeichnet, dass** der zweite Winkel (α_{O2}) zwischen 2° und 30°, besonders bevorzugt 5° bis 25°, ganz besonders bevorzugt 10 bis 20° beträgt.

14. Schneid- und Separiervorrichtung (100) nach Anspruch 12 oder 13, **dadurch gekennzeichnet, dass** der zweite Winkel (α_{O2}) entgegen einem Drehsinn (M) der Förderschnecke (130) ausgerichtet ist.

## Claims

1. Conveying screw (130) for a cutting and separating device (100), comprising a screw shaft (131) having at least one helical screw flight (132) integrally moulded thereon, which, in an installed position, has a front flank (140) for transporting a foodstuff by pushing, a rear flank (141) arranged on the opposite side, and, at its distal end (142) between the front flank (140) and the rear flank (141), a cylindrical portion (143), which is formed in the transition region to the front flank (140) of the screw flight (132) with a sharpened cutting edge (133), the sharpened cutting edge (133) having a positive rake angle(γ) arranged between the front flank (140) and a processing plane (144) oriented at right angles to the screw shaft (131),
**characterized in that,**
that the sharpened cutting edge (133) is formed from a groove (145) made on a distal end (142) of the front flank (140), the outer contour (146) of which groove cuts into the cylindrical portion (143).

2. The conveying screw (130) according to claim 1,
**characterized in that** the rake angle(γ)is between 10° and 50°, particularly preferably 20° and 40°, very particularly preferably between 25° and 35°.

3. The conveying screw (130) according to claim 1 or 2,
**characterized in that** between the front flank (140) and the cylindrical portion (143) there is a wedge angle**(δ)** of 40° to 80°, particularly preferably of 50° to 70°, is very particularly preferably formed from 55 ° to 65°.

4. The conveying screw (130) according to one of claims 1 to 3, **characterized in that** a radius or a bevel (147) is arranged between the cylindrical portion (143) and the rear flank (141).

5. Cutting and separating device (100) with a conveying screw (130) according to one of claims 1 to 4, wherein the conveying screw (130) is rotatably mounted in a pressure housing (111) of a shredding drum (110), which is formed with an inlet opening (113) at a first end portion (112) and with an outlet opening (115) at a second end portion (114),
**characterized in that,**
that a plurality of cutting openings (120) are arranged in a pressure housing portion (116) of the pressure housing (111) and pass right through the pressure housing portion (116) from an inner wall (117) to an outer wall (118).

6. The cutting and separating device (100) according to claim 5, **characterized in that** the sharpened cutting edge (133) is formed on a sweeping section (134) of the conveying screw (130) which sweeps over the cutting openings (120).

7. The cutting and separating device (100) according to claim 5 or 6, **characterized in that** the cylindrical portion (143) of the screw flight (132) has a width(bs) which is at least the diameter(∅_{O}) of the cutting openings (120) on the inner wall (117).

8. The cutting and separating device (100) according to one of Claims 5 to 7, **characterized in that** the cutting openings (120) are oriented with hole axes (121) inclined at an angle (α_{O1},α_{O2}) in relation to the inner wall (117).

9. The cutting and separating device (100) according to claim 8, **characterized in that** the angle (α_{O1}, α_{O2}) comprises a first angle (α_{O1}) which is arranged on the side of the cutting opening (120) facing away from the inlet opening (113) of the pressure housing (111) between its hole axis (121) and the inner wall (117).

10. The cutting and separating device (100) according to claim 9, **characterized in that** the first angle(α_{O1}) is between 60° and 88°, particularly preferably 65° to 85°, very particularly preferably 70 to 80°.

11. The cutting and separating device (100) according to one of claims 5 to 10, **characterized in that** each cutting opening (120) on the inner wall (117) has a cutting opening edge (122a) facing the outlet opening (115) and a drawing-in edge (122b) facing the inlet opening (113).

12. The cutting and separating device (100) according to one of claims 8 to 11, **characterized in that** the angle (α_{O1}, α_{O2}) comprises a second angle (α_{O2}) which is located in the circumferential direction of the pressure housing portion (116) between the hole axis (121) and the radius (R) of the pressure housing portion (116).

13. The cutting and separating device (100) according to claim 12, **characterized in that** the second angle(α_{O2}) is between 2° and 30°, particularly preferably 5° to 25°, very particularly preferably 10 to 20°.

14. The cutting and separating device (100) according to claim 12 or 13, **characterized in that** the second angle (α_{O2}) is aligned counter to a direction of rotation (M) of the conveying screw (130).

## Revendications

1. Vis transporteuse (130) pour un dispositif de coupe et de séparation (100), comprenant un arbre de vis (131) sur lequel est formé au moins un filet de vis (132) formé en spirale, qui comporte en position de montage un flanc avant (140) pour le transport par poussée d'un produit alimentaire, un flanc arrière (141) disposé sur le côté opposé ainsi qu'à son extrémité distale (142) entre le flanc avant (140) et le flanc arrière (141) une section cylindrique (143), qui est formée dans la zone de transition vers le flanc avant (140) du filet de vis (132) avec une arête de coupe affûtée (133), dans laquelle l'arête de coupe affûtée (133) comporte un angle de coupe positif (γ) disposé entre le flanc avant (140) et un plan d'usinage (144) orienté perpendiculairement à l'arbre de vis (131),
**caractérisée en ce**
**que** l'arête de coupe affûtée (133) est formée par une rainure (145) ménagée à une extrémité distale (142) du flanc avant (140), dont le contour extérieur (146) coupe la section cylindrique (143).

2. Vis transporteuse (130) selon la revendication 1, **caractérisée en ce que** l'angle de coupe (γ) est compris entre 10° et 50°, de manière davantage préférée entre 20° et 40°, de manière davantage préférée entre toutes entre 25° et 35°.

3. Vis transporteuse (130) selon la revendication 1 ou 2, **caractérisée en ce qu'**un angle de coin (δ) de 40° à 80°, de manière davantage préférée de 50° à 70°, de manière davantage préférée entre toutes de 55° à 65°, est formé entre le flanc avant (140) et la section cylindrique (143).

4. Vis transporteuse (130) selon l'une des revendications 1 à 3, **caractérisée en ce qu'**un rayon ou un chanfrein (147) est disposé entre la section cylindrique (143) et le flanc arrière (141) .

5. Dispositif de coupe et de séparation (100) doté d'une vis transporteuse (130) selon l'une des revendications 1 à 4, dans lequel la vis transporteuse (130) est montée en rotation dans un boîtier résistant à la pression (111) d'un tambour de broyage (110), sur la première section d'extrémité (112) duquel est formée une ouverture d'entrée (113) et sur la seconde section d'extrémité (114) duquel est formée une ouverture de sortie (115),
**caractérisé en ce**
**qu'**une pluralité d'ouvertures de coupe (120) sont disposées dans une section de boîtier résistant à la pression (116) du boîtier résistant à la pression (111), lesquelles traversent la section de boîtier résistant à la pression (116) d'une paroi interne (117) à une paroi externe (118).

6. Dispositif de coupe et de séparation (100) selon la revendication 5, **caractérisé en ce que** l'arête de coupe affûtée (133) est formée sur une section (134) de la vis transporteuse (130) qui balaye les ouvertures de coupe (120).

7. Dispositif de coupe et de séparation (100) selon la revendication 5 ou 6, **caractérisé en ce que** la section cylindrique (143) du filet de vis (132) comporte une largeur (bₛ) au moins égale au diamètre (∅_{O}) des ouvertures de coupe (120) sur la paroi interne (117).

8. Dispositif de coupe et de séparation (100) selon l'une des revendications 5 à 7, **caractérisé en ce que** les ouvertures de coupe (120) sont orientées avec des axes de perforation (121) inclinés d'un angle (αₒ, αₒ₂) par rapport à la paroi interne (117) .

9. Dispositif de coupe et de séparation (100) selon la revendication 8, **caractérisé en ce que** l'angle (αₒ₁, αₒ₂) comprend un premier angle (αₒ₁) qui est disposé sur le côté de l'ouverture de coupe (120) opposé à l'ouverture d'entrée (113) du boîtier résistant à la pression (111) entre son axe de trou (121) et la paroi interne (117).

10. Dispositif de coupe et de séparation (100) selon la revendication 9, **caractérisé en ce que** le premier angle (αₒ₁) est compris entre 60° et 88°, de manière davantage préférée entre 65° et 85°, de manière davantage préférée entre toutes entre 70° et 80°.

11. Dispositif de coupe et de séparation (100) selon l'une des revendications 5 à 10, **caractérisé en ce que** chaque ouverture de coupe (120) comporte sur la paroi interne (117) un bord d'ouverture coupant (122a) tourné vers l'ouverture de sortie (115) et un bord d'ouverture rentrant (122b) tourné vers l'ouverture d'entrée (113).

12. Dispositif de coupe et de séparation (100) selon l'une quelconque des revendications 8 à 11, **caractérisé en ce que** l'angle (αₒ₁, αₒ₂) comprend un second angle (αₒ₂) qui est disposé dans la direction circonférentielle de la section de boîtier résistant à la pression (116) entre l'axe de trou (121) et le rayon (R) de la section de boîtier résistant à la pression (116).

13. Dispositif de coupe et de séparation (100) selon la revendication 12, **caractérisé en ce que** le second angle (αₒ₂) est compris entre 2° et 30°, de manière davantage préférée entre 5° et 25°, de manière davantage préférée entre toutes entre 10 et 20°.

14. Dispositif de coupe et de séparation (100) selon la revendication 12 ou 13, **caractérisé en ce que** le second angle (αₒ₂) est orienté dans le sens opposé à un sens de rotation (M) de la vis transporteuse (130).
